# EUROPEAN PATENT APPLICATION

(11) **EP 3 663 924 A1**
(43) Date of publication of application: **10.06.2020**
(21) Application number: 18209715.4
(22) Date of filing: 03.12.2018
(51) Int. Cl.: G06F 11/30

(54) **SUPERVISOR NETWORK MANAGEMENT**

(71) Applicant: Emm! solutions GmbH, 71263 Weil der Stadt (DE)
(72) Inventor: Müller, Armin, 71263 Weil der Stadt (DE)
(74) Representative: Meyer zu Bexten, Elmar

(57) **Abstract**

**Problem**

Existing solutions lack a complete and comprehensive vehicle-wide database. To this end, an intelligent observation unit is required that transforms signals to data centrally across all technologies, makes them locally evaluable, and ultimately renders them available for business processes.

**Solution**

In view of these challenge, several different server systems with their flexible services and functions of several different controllers are combined with real-time operating systems, connecting simulation and control. All signals throughout the network are accepted and brought to an evaluable data level. In the resulting large data lake, all the information and information streams of the connected subsystems are locally available, such as within the vehicle. The data should then be processed locally and externally.

On this basis, cross-system services such as real-time analytics, real-time database management, real-time diagnostics, and online communications to external ports are possible. Those ports should then, for efficient processing, also allow integration into a test environment and connection to an IT platform for business processes such as product lifecycle management (PLM).

## Description

### Technical Field

The invention relates to the product and process as per the first portion of the independent claims.

### Background Art

In the context of automation and digitization, new possibilities arise in connection with today's products. New transport concepts, centrally controlled and supplied with information from the infrastructure, are on the verge of breakthrough. At their core, as with all automation developments, is the safe and robust monitoring of driving functions. This is what enables the connection of the vehicle to a higher-level coordination system controlling its use. Safeguarding and diagnostics account for up to 80 % of the effort required in today's system development. This is due to the consistent testing and documentation required, for example, by the ISO 26262 standard in the automotive sector.

The state of the art comprises highly automated testing coordinated by an IT system. In addition, applications for evaluation are known based on smart analytics with different objectives. Likewise, the prior art encompasses IT operating systems (OS) for server applications and their gateway function in vehicles.

### Summary of invention

A key aspect of the invention is the reduction of the testing and documentation effort outlined above. To this end, the invention provides a central observation unit whose function may best be characterized as supervisor network management (SNM). This central observation unit is an important component of the vehicle's electronic architecture from the beginning of product development through to mass production. All development stages are recorded, analyzed, processed, and documented at the signal-data function level. With no data being lost, all development statuses are recorded and evaluated automatically, massively reducing the effort for backup and diagnosis. In addition, any faults in the system are visualized by means of a permanent vehicle or object-external evaluation, thus focusing future development effort. This approach may also be used for robotics applications beyond the automotive sector.

### Technical Problem

Existing solutions lack a complete and comprehensive vehicle-wide database. Hence, an intelligent observation unit is required that centrally transforms signals into data across all technologies, makes them locally evaluable, and ultimately renders them for business processes.

Given these demands, a requirement arises to locally transform, validate, and store data in real time. This process must run at the fastest rate available in the system. In the context of automotive applications, one millisecond has proved necessary. Due to the abundance of records (more than 500 per cycle), an enormous flood of data is created which must be processed directly without caching. To achieve high availability, the operating system must heal errors quickly and, in case of a crash, be able to operate the entire vehicle again in less than 300 ms upon reboot. This time is determined by the latency of the fastest system to control (e. g., the vehicle itself).

The resulting data lake is to be processed by concurrent services. Flexible use of these services, including open source, is required. The latter also calls for highly efficient handling of memory and controller resources.

In order to optimally integrate the services, standard transformation layers as well as an easy integration of open source services is required. Processing necessitates efficient handling of computer and hardware performance. Likewise, external networking is compulsory.

Many real-time systems work with a CAN or other specific bus systems. These bus systems are often connected by proprietary tools that cannot be easily and permanently integrated into a different environment. An additional challenge thus lies in the integration of signals and data via a separate compact solution in order to provide continuous data availability.

### Solution to Problem

In view of these challenge, several different server systems with their flexible services and functions of several different controllers are combined with real-time operating systems, connecting simulation and control. All signals throughout the network are accepted and brought to an evaluable data level. In the resulting large data lake, any information and information streams of the connected subsystems is locally available, such as within the vehicle. The data should then be processed locally and externally.

On this basis, cross-system services such as real-time analytics, real-time database management, real-time diagnostics, and online communications to external ports are possible. Those ports should then, for efficient processing, also allow integration into a test environment and connection to an IT platform for business processes such as product lifecycle management (PLM).

### Advantageous effect of invention

The invention allows for central control of all system functions by continuously checking their timing behavior, value range, and individual values of all signals in real time.

Furthermore, the use of services is made possible, which enables real-time diagnostics, external communications, and functional analyses in various forms.

Likewise, flexible integration of data bus systems allows for the integration of all signals, data, and information from the system to be monitored.

The external connection of the observation unit is secured by a firewall, which is enabled by analytics.

SNM can be used to grant or revoke approval of systems. It can thus ensure the overall system function as a central node.

SNM includes an interface to external systems and can interact with them, for example, for simulation or what may be called a "digital twin".

Further advantageous effects lie in the secure data transfer through a dynamic key and acceleration of the development process. Complex system networks become controllable and manageable. These may then also be integrated into a so-called system-of-systems network.

### Brief description of drawings

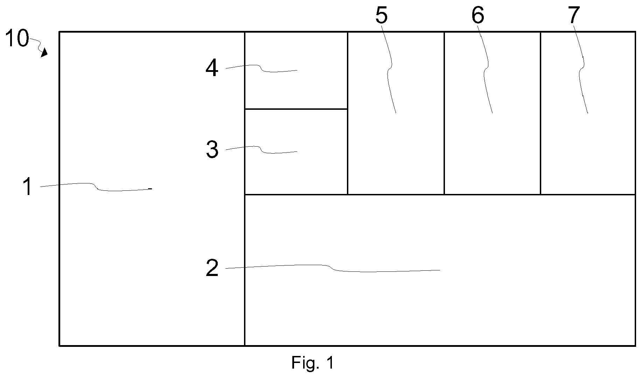

Figure 1 is a block diagram of an embodiment of the invention.

### Description of embodiments

The depicted embodiment incorporates a highly efficient operating system (2) with its own kernel based on open operating systems. Prior-art server operating systems are too slow for real-time data processing and the use of embedded software operating systems fails due to their specific characteristics. The embodiment thus includes a special kernel based on open standards (e. g., Linux). When operated with this kernel, the embodiment is compatible to various IT standards and IT services. The kernel manages the vast amount of data and meets the timing requirements imposed by the invention.

An embodiment safeguards the availability of the operating system (2). Prior-art server operating systems sometimes include self-healing capabilities or at least restarting after the OS crashes. This technology is adapted for the new operating system (2) with real-time behavior.

Integration of a firewall and secure data transmission are additional features of an embodiment. Since the system has an external connection (4), an intelligent firewall is integrated. This is based on system-specific analytics (6), which additionally observes the influence on function and secure external data transmission such as may be enabled by a dynamic key. That dynamic key configures the data transfer depending on the functions running in one or more systems. This must not affect system performance. The adaptive behavior of the firewall is integrated.

An embodiment further provides functionality to ensure real-time data quality. Such quality of the data, meaning is temporal completeness and physical or logical correctness, is crucial for further processing and decision-making. Said data will thus be checked and validated in terms of time and value.

Application and availability of data services (4) forms another aspect of the invention. If possible, standard solutions such as operating-system-level virtualization by means of Docker are integrated. Where such standard solution cannot be used, an adaptive layer for data reuse, analytics (6), visualization, and sharing is integrated.

Evaluation and monitoring of data streams is another key feature of the invention. Since all data is processed by the SNM, pertinent data streams between the systems may be tapped. This in turn allows to observe the activities in the system network and to intelligently intervene upon analysis to ensure functions and security locally as well as in the overall system.

An embodiment provides for system control and shutdown mechanisms. Based on the above-mentioned evaluations, software modules (7) are offered that may switch off subsystems or influence functions. This ensures the security and fault tolerance of the system network.

In terms of connection to external systems (4), the utility "rsync" is known as a standard for the exchange of data among servers. The integration of data flow to and from external systems requires connection of the external interface. That data interface has a real-time capability. The security mechanisms for communication are integrated.

Once external connections (4) are established, external tests leveraging an automatic integration with business processes may be carried out. Herein, the interfaces to the external IT system are modular. In addition, a twin on the external side is possible.

An advanced embodiment even allows for superposed reality. Performance of the external interface is configured so that the digital twin or simulation may be operated externally. The results may be included in decision making processes. Software, hardware, and system behavior are optimized to increase system performance.

### Industrial applicability

The invention is applicable, among others, throughout the automotive and robotics industries.

### Reference signs list

- 1: Hardware control unit
- 2: Operating system
- 3: Data transformation layer
- 4: External data services and connections
- 5: Database
- 6: Analytics
- 7: Further modules
- 10: Observation unit

## Claims

1. Observation unit (10)
**characterized in**
a hardware control unit (1) with adaptive data bus connections,
an operating system (2), and
a data transformation layer (3) for connecting services (4).

2. Observation unit (10) as per Claim 1
wherein the connections are adaptive to at least one of the following networks:
an Ethernet,
a controller area network,
a local interconnect network,
a universal serial bus, or
a serial port compliant to a standard such as RS-232.

3. Observation unit (10) as per Claim 1 or Claim 2
further comprising
a database (5).

4. Observation unit (10) as per any of the preceding claims
further comprising
analytics (6).

5. Observation unit (10) as per any of the preceding claims
comprising
further modules (7).
